# EUROPEAN PATENT APPLICATION

(11) **EP 4 535 718 A1**
(43) Date of publication of application: **09.04.2025**
(21) Application number: 24204163.0
(22) Date of filing: 02.10.2024
(51) Int. Cl.: H04L 9/32

(54) **ZERO KNOWLEDGE PROOF GENERATION FOR SENSING DEVICES**

(30) Priority: 03.10.2023 GB 202315120
(71) Applicant: Nokia Technologies Oy, 02610 Espoo (FI)
(72) Inventor: KLIMEK, Ivan, Stuttgart (DE); SIGNORINI, Matteo, Massy (FR)
(74) Representative: Nokia EPO representatives

(57) **Abstract**

A method comprising: acquiring sensed data; obtaining public data shared with a Zero Knowledge Proof, ZKP, verifier device; applying a logic function to the sensed data to determine whether a statement concerning the sensed data is verified or not, wherein the logic function is shared with the ZKP verifier device; generating a ZKP that the statement is true by applying a ZKP generation algorithm to the public data and private data using the logic function, the private data including the sensed data; deleting the sensed data once the ZKP has been generated; sending the ZKP to the ZKP verifier device; wherein deleting the sensed data is performed before sending the ZKP to the ZKP verifier device.

## Description

### TECHNICAL FIELD

Various example embodiments relate generally to a method and apparatus for zero knowledge proof generation and verification.

### BACKGROUND

Sensing-as-a-Service is a key feature in next-generation (5G NR, 6G) wireless networks, leveraging cellular infrastructure to perform radar sensing. In various applications, sensed data produced by sensing devices raises privacy and security issues that are not well addressed with current data protection mechanisms.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect a method comprises: acquiring sensed data; obtaining public data shared with a Zero Knowledge Proof, ZKP, verifier device; applying a logic function to the sensed data to determine whether a statement concerning the sensed data is verified or not, wherein the logic function is shared with the ZKP verifier device; generating a ZKP that the statement is true by applying a ZKP generation algorithm to the public data and private data using the logic function, the private data including the sensed data; deleting the sensed data once the ZKP has been generated; sending the ZKP to the ZKP verifier device; wherein deleting the sensed data is performed before sending the ZKP to the ZKP verifier device.

The public data may include at least one parameter of the statement to be verified by the logic function.

The statement may include a mathematical combination of at least two conditions, wherein to determine whether the statement is verified the logic function is adapted to determine whether the mathematical combination is verified.

To determine whether the statement is verified, the logic function may be adapted to determine whether a property of the sensed data is verified.

To determine whether the statement is verified, the logic function may be adapted to determine whether an event has occurred in the sensed data.

To determine whether the statement is verified, the logic function may be adapted to determine whether the logic function was applied to the sensed data during a given time period.

The sensed data may include at least one localization of a moving entity. To determine whether the statement is verified the logic function is adapted to perform at least one of: determining based on the at least one localization whether the moving entity is in an allowed geographical area; and determining based on the at least one localization whether the moving entity is not in a forbidden geographical area.

The sensed data may include successive localizations of a moving entity. To determine whether the statement is verified the logic function is adapted to perform at least one of: determining based on the successive localizations whether the moving entity is moving along an allowed geographical path; and determining based on the successive localizations whether the moving entity is not moving along a forbidden geographical path.

The method may include: receiving, from the verifier device, at least one trigger parameter that specifies when the ZKP has to be generated.

The method may include: receiving, from the verifier device, at least one configuration parameter of the statement to be verified; and configuring the logic function with the received at least one configuration parameter.

According to another aspect, an apparatus comprises means (e.g. processing circuitry) for performing: acquiring sensed data; obtaining public data shared with a Zero Knowledge Proof, ZKP, verifier device; applying a logic function to the sensed data to determine whether a statement concerning the sensed data is verified or not, wherein the logic function is shared with the ZKP verifier device; generating a ZKP that the statement is true by applying a ZKP generation algorithm to the public data and private data using the logic function, the private data including the sensed data; deleting the sensed data once the ZKP has been generated; sending the ZKP to the ZKP verifier device; wherein deleting the sensed data is performed before sending the ZKP to the ZKP verifier device.

The apparatus may comprise means (e.g. processing circuitry) for performing one or more or all steps of the method according to the first aspect. The means or processing circuitry may include at least one processor and at least one memory storing instructions that, when executed by the at least one processor, cause the apparatus to perform one or more or all steps of a method according to the first aspect.

According to another aspect, an apparatus comprises at least one processor and at least one memory storing instructions that, when executed by the at least one processor, cause the apparatus to perform: acquiring sensed data; obtaining public data shared with a Zero Knowledge Proof, ZKP, verifier device; applying a logic function to the sensed data to determine whether a statement concerning the sensed data is verified or not, wherein the logic function is shared with the ZKP verifier device; generating a ZKP that the statement is true by applying a ZKP generation algorithm to the public data and private data using the logic function, the private data including the sensed data; deleting the sensed data once the ZKP has been generated; sending the ZKP to the ZKP verifier device; wherein deleting the sensed data is performed before sending the ZKP to the ZKP verifier device.

The instructions, when executed by the at least one processor, may cause the apparatus to perform one or more or all steps of a method according to the first aspect.

According to another aspect, a computer program comprises instructions that, when executed by an apparatus, cause the apparatus to perform: acquiring sensed data; obtaining public data shared with a Zero Knowledge Proof, ZKP, verifier device; applying a logic function to the sensed data to determine whether a statement concerning the sensed data is verified or not, wherein the logic function is shared with the ZKP verifier device; generating a ZKP that the statement is true by applying a ZKP generation algorithm to the public data and private data using the logic function, the private data including the sensed data; deleting the sensed data once the ZKP has been generated; sending the ZKP to the ZKP verifier device; wherein deleting the sensed data is performed before sending the ZKP to the ZKP verifier device.

The instructions may cause the apparatus to perform one or more or all steps of a method according to the first aspect.

According to another aspect, a non-transitory computer readable medium comprises program instructions stored thereon for causing an apparatus to perform at least the following: acquiring sensed data; obtaining public data shared with a Zero Knowledge Proof, ZKP, verifier device; applying a logic function to the sensed data to determine whether a statement concerning the sensed data is verified or not, wherein the logic function is shared with the ZKP verifier device; generating a ZKP that the statement is true by applying a ZKP generation algorithm to the public data and private data using the logic function, the private data including the sensed data; deleting the sensed data once the ZKP has been generated; sending the ZKP to the ZKP verifier device; wherein deleting the sensed data is performed before sending the ZKP to the ZKP verifier device.

The program instructions may cause the apparatus to perform one or more or all steps of a method according to the first aspect.

According to a second aspect, a method comprises: obtaining public data shared with a Zero Knowledge Proof, ZKP, prover device; configuring the ZKP prover device with a logic function adapted to determine whether a statement concerning sensed data acquired by the ZKP prover device is verified or not; receiving, from the ZKP prover device, a ZKP concerning whether the statement is true; verifying the ZKP by applying a ZKP verification algorithm to the ZKP and the public data.

Configuring the prover device with a logic function may include sending at least one configuration parameter of the statement to the prover device. Configuring the prover device with a logic function may include: selecting the logic function to be used by the prover device among a set of logic functions; and sending an identification of the logic function to the prover device.

According to another aspect, an apparatus comprises means for: obtaining public data shared with a Zero Knowledge Proof, ZKP, prover device; configuring the ZKP prover device with a logic function adapted to determine whether a statement concerning sensed data acquired by the ZKP prover device is verified or not; receiving, from the ZKP prover device, a ZKP of the truth of the statement; verifying the ZKP by applying a ZKP verification algorithm to the ZKP and the public data.

The apparatus may comprise means (e.g. processing circuitry) for performing one or more or all steps of the method according to the second aspect. The means or processing circuitry may include at least one processor and at least one memory storing instructions that, when executed by the at least one processor, cause the apparatus to perform one or more or all steps of a method according to the second aspect.

According to another aspect, an apparatus comprises at least one processor and at least one memory storing instructions that, when executed by the at least one processor, cause the apparatus to perform: obtaining public data shared with a Zero Knowledge Proof, ZKP, prover device; configuring the ZKP prover device with a logic function adapted to determine whether a statement concerning sensed data acquired by the ZKP prover device is verified or not; receiving, from the ZKP prover device, a ZKP of the truth of the statement; verifying the ZKP by applying a ZKP verification algorithm to the ZKP and the public data.

The instructions, when executed by the at least one processor, may cause the apparatus to perform one or more or all steps of a method according to the second aspect.

According to another aspect, a computer program comprises instructions that, when executed by an apparatus, cause the apparatus to perform: obtaining public data shared with a Zero Knowledge Proof, ZKP, prover device; configuring the ZKP prover device with a logic function adapted to determine whether a statement concerning sensed data acquired by the ZKP prover device is verified or not; receiving, from the ZKP prover device, a ZKP of the truth of the statement; verifying the ZKP by applying a ZKP verification algorithm to the ZKP and the public data.

The instructions may cause the apparatus to perform one or more or all steps of a method according to the second aspect.

According to another aspect, a non-transitory computer readable medium comprises program instructions stored thereon for causing an apparatus to perform at least the following: obtaining public data shared with a Zero Knowledge Proof, ZKP, prover device; configuring the ZKP prover device with a logic function adapted to determine whether a statement concerning sensed data acquired by the ZKP prover device is verified or not; receiving, from the ZKP prover device, a ZKP of the truth of the statement; verifying the ZKP by applying a ZKP verification algorithm to the ZKP and the public data.

The program instructions may cause the apparatus to perform one or more or all steps of a method according to the second aspect.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 illustrate an embodiment of a system based on ZKP for sensed data according to one or more example embodiments.
FIG. 2 shows a flow diagram of a method for ZKP generation and verification according to one or more example embodiments.
FIG. 3 shows a flowchart of a method for ZKP generation and verification according to one or more example embodiments.
FIGS. 4 to 5 show example logic functions that may be used for ZKP generation.
FIG. 6 shows a flowchart of a method for ZKP generation according to one or more example embodiments.
FIG. 7 shows a flowchart of a method for ZKP verification according to one or more example embodiments.
FIG. 8 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as being limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

In the following, different exemplary embodiments will be described using, as an example, an access architecture to which the exemplary embodiments may be applied, without restricting the exemplary embodiments to such an architecture, however. It is obvious for a person skilled in the art that the exemplary embodiments may also be applied to other kinds of communications networks having suitable means by adjusting parameters and procedures appropriately.

The different exemplary embodiments disclosed herein may be implemented for radio telecommunication systems, including a radio access architecture based on long term evolution advanced (LTE Advanced, LTE-A) or new radio (NR, 5G) network or 6G network. Prior or subsequent generations of radio telecommunication systems may be concerned by ZKP generation and verification as disclosed herein.

Some examples disclosed herein may be implemented for radio telecommunication systems such as wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

Some examples disclosed herein may be implemented for radio telecommunication systems including machine-to-machine (M2M) devices or Internet of Things (IoT) devices, satellite systems, etc.

A method for ZKP generation and verification using ZKP integrated into a sensing device is disclosed herein that is applied to sensing data produced by the sensing device in order to solve the problem of data protection in a way that does not reduce the usefulness of sensing yet makes it impossible for sensing data to leak or be misused.

This method may be integrated into a Sensing-as-a-Service feature in next-generation (5G NR, 6G) wireless networks. The sensing service may be fully integrated in the wireless network for simultaneous operation with communication services.

Wireless networks are typically praised for their communication features alone. In that regard, the 5G NR access interface with its large bandwidth, extremely high carrier frequency, and massive antenna array offers great opportunities for accurate localization and sensing systems. Moreover, 6G systems will continue the movement towards even higher frequency operation, e.g., at the millimeter wave (mmWave) as well as THz ranges, and much larger bandwidths.

One challenge is that such sensing operation could be performed on UE (User Equipment) or deployed within any unmanaged and unsupervised equipment from a Internet Service Provider (ISP) or Telecommunications operator installed at the end user localization (such as in smart homes). As such, 5G NR or 6G and beyond networks could suffer from data leakage as sensed data stored and processed either within UE or outsourced to the edge cloud may be stolen and/or compromised. Of course, the same applies for sensing done from traditional base stations, as well..

Wherever data is generated, the problem of data protection arises, access to data must be controlled, data itself must be protected, many layers of complexities make this task difficult as data can leak through shortcomings of the application layer, database layer, human factor etc.

Here a method is proposed, that instead of focusing on sensed data protection, removes the need of communicating or storing any sensed data, while just proving a statement that is adapted to prove the ownership or the knowledge of sensed data. This is done by exploiting a powerful cryptographic scheme named Zero Knowledge Proof (or ZKP). A zero-knowledge protocol is a protocol that allows to prove the knowledge of some specific mathematical fact or statement, without revealing any information about the fact or statement itself. The proof generated in a zero-knowledge protocol is called a zero-knowledge proof.

The idea behind ZKPs (Zero Knowledge Proof), is to prove the knowledge of some information without revealing the information itself. As an example, digital signatures can be considered as zero knowledge proofs. By signing a message, we can prove that we know the private key that corresponds to a widely known public key without giving away any information about the private key itself. In fact, public-key encryption only works because it is a zero-knowledge protocol. If signatures revealed information about private keys, then malicious actors would be able to impersonate their victims by analyzing their signatures and recovering the respective private keys.

A protocol implementing zero-knowledge proofs of knowledge (i.e. a fact, a statement) involves a prover (i.e. the entity that generates the proof) and a verifier (i.e. the entity that verifies the proof).

Such a ZKP protocol may require interactive input from the verifier. This interactive input may for example be in the form of one or more challenges such that the responses from the prover will convince the verifier if and only if the knowledge (i.e. fact, statement) is true, i.e., if the prover does possess the claimed knowledge. If this was not the case, the verifier could record the execution of the protocol and replay it to convince someone else that they possess the secret information.

There exists at least two forms of non-interactive ZKP (Zero Knowledge Proof) which are named ZK-SNARK and ZK-STARK. ZK-STARK stands for Zero-Knowledge Scalable Transparent Argument of Knowledge while ZK-SNARK stands for Zero-Knowledge Succinct Non-Interactive Argument of Knowledge.

ZK-SNARK protocols evolved as a trustworthy option for elevating security in ZKP technologies. The primary design of these ZKP protocols revolved around the use of elliptic curves for improving security. Elliptic curves serve as a vital highlight in cryptography for efficient discovery of the discrete logarithm of a random elliptic curve element. Some examples of ZK-SNARK protocols are ZoKrates and PLONK.

ZK-STARK protocols have a prominent focus on hash functions for their cryptographic foundations. Moving the cryptographic assumption to a perfect hash function assumption makes ZK-STARKs quantum computer resistant (which is not the case for ZK-SNARKs).One example of a ZK-STARK protocol is zk-STARK.

ZKP protocols may be applied to general purpose verifiable computing. For example, RISC (Reduced Instruction Set Computing) Zero is zero-knowledge virtual machine that can run on any platform. It is a virtual microcontroller / co-processor that produces receipts for every program it runs which can be later verified by anyone in milliseconds - even if there is not trust in the party that executed the code.

Zero-Knowledge Proofs can be abstracted to a system that takes two inputs: private data and public data shared between the prover and the verifier.

Zero-knowledge proofs (ZKP) are powerful cryptographic primitives which allow to prove the validity of a statement without revealing information other than the truth of the statement.

Any bounded computation can be represented as a logic function C. ZKP protocol allow to generate a proof z=Z(x,w) that the prover knows private data w and public data x and the verifier can verify that the proof is valid by testing that C(Z(x,w))=0.

According to embodiments disclosed herein, a logic function (that may be implemented by processing means including circuitry and / or software and / or any combination of circuitry and software) is also part of the public knowledge that is shared between the prover and the verifier. The logic function is used to verify whether a statement is true using as inputs the private data and the public data. The prover is configured to generate a proof that a statement is true given the provided inputs. On the verifier side, this proof can be verified if the same public data and same logic function are available, i.e. shared with the prover.

The logic function may be any function (e.g. mathematical function) applicable to sensed data and adapted to verify that a statement is true. The logic function may be or may include or may be based on any algorithm, logic, mathematical function, mathematical relationship, equation, etc. The logic function may be implemented by any processing means, e.g. processing circuitry, whether digital or analog or combining digital and analog processing. The statement may be any statement that may be verified based on the provided the private data and public data.

The private data used as input to the ZKP generation algorithm may include the sensed data. The sensed data refer herein to any type of sensed data. Sensed data may be raw data as acquired by the sensing device and / or processed data resulting of a processing (e.g. preprocessing, filtering, etc) applied to the raw data.

When the statement is verified, the proof of the truth of the statement is generated without revealing information other than the truth of the statement itself. Especially the sensed data is not revealed by the proof. Further the sensed data may be deleted before using the proof, e.g. before sending the ZKP to the ZKP verifier. When the statement is not verified, no proof of the truth of the statement is generated. When the statement is not verified, another statement may be verified and a proof of the truth of this other statement may be generated.

A statement or condition may be any statement concerning the sensed data that may be verified by the logic function. A statement or condition may be:
- a statement concerning one or more property (e.g. a mathematical property) of the sensed data;
- a statement with respect to the occurrence of an event that occurred in the sensed data (e.g. a mathematical fact or a mathematical property that is verified at some time by the sensed data), where this event is detected by applying the logic function to the sensed data;
- a statement that the logic function was applied to the sensed data at a given time or during a given time period (the given time or during a given time period may be specified in the public data by the verifier);
- a statement concerning a processing applied to the sensed data;
- a statement with respect to an activity or action performed by the sensing device using the sensed data;
- etc;

The statement may include a mathematical combination (e.g. logical combination) of two or more conditions, such that to determine whether the statement is verified the logic function is adapted to determine whether the mathematical combination (e.g. logical combination) of the two or more conditions is verified.

The statement verification and the generation may be performed without revealing any information about the sensed data.

Any parameter of the statement (also referred to as a configuration parameter) required to verify the statement may be configured by the verifier, sent to the prover and used by the prover to configure the logic function. Such a configuration parameter may be part of the public data used by the ZKP generation algorithm and shared between the prover and verifier.

In one or more use cases for verifying the localization (i.e. the geographical position) of a moving entity (a person, a device, a vehicle, etc), the sensed data may include localization data of the moving entity. To determine whether the statement is verified the logic function may be adapted to determine whether the moving entity is located in an allowed geographical area (or, alternatively, in to determine whether the moving entity is located in a forbidden geographical area). The geographical area may change over time. The geographical area may be specified by the verifier device and sent by the verifier to the prover. The geographical area may be included in the private data or in the public data shared between the prover and the verifier. The verifier may send to the prover at least one configuration parameter, defining the geographical area and used to configure the logic function.

In one or more use cases for verifying the displacement (i.e. the geographical path) of a moving entity (a person, a device, a vehicle, etc), the sensed data may include localization data of the moving entity. To determine whether the statement is verified the logic function may be adapted to determine whether the moving entity is moving along a geographical path. The geographical path may change over time. The geographical path may be specified by the verifier device and sent by the verifier to the prover. The geographical path may be included in the public data shared between the prover and the verifier. The verifier may send to the prover at least one configuration parameter, defining the geographical path and used to configure the logic function.

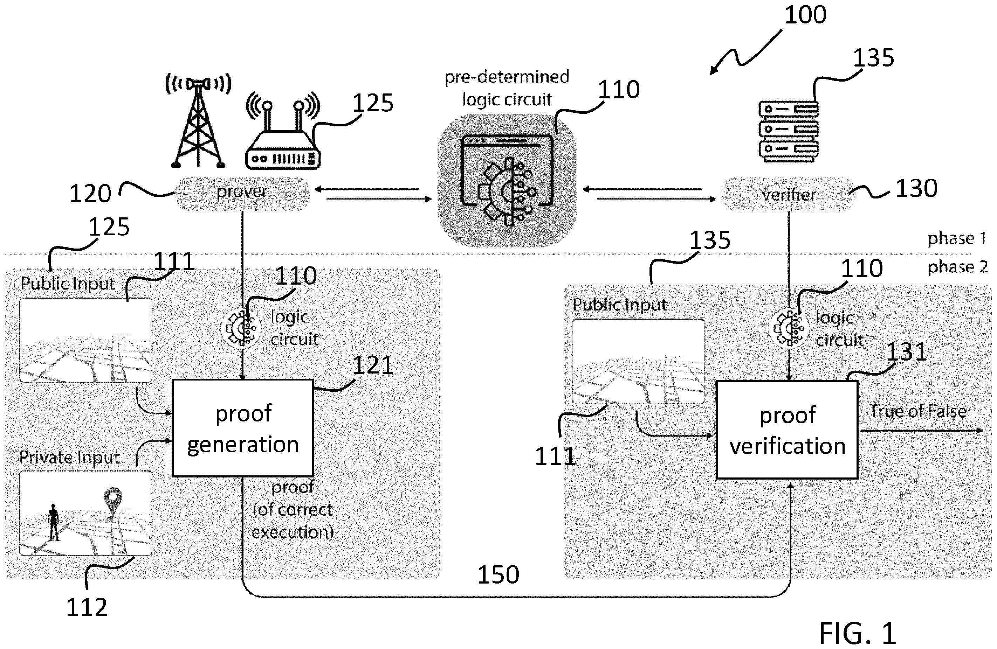

FIG. 1 illustrate an embodiment of a system based on ZKP for sensed data.

The usefulness of this ZKP-based method is, at least partially, based on the "ability" of the logic function to implement any arbitrary logic corresponding to a statement to be proven for sensed data in a context of a use case. The logic function may be used by a ZKP generation algorithm to generate a proof that the statement is true. A ZKP-based sensing solution is provided in which the sensed data is never revealed and thus cannot be leaked or stolen / misused.

The system includes a prover 120 located in a prover device 125 and a verifier 130 located in a verifier device 135. The prover device 125 may be for example a sensing device. The verifier device 135 may be a network entity.

In a first phase (referred to as the configuration phase), the prover device 125 and the verifier device 135 are configured with a logic function (e.g. hardware and / or software) adapted to implement a predetermined logic corresponding to a use case. The logic function is applied to sensed data and is adapted to determine whether a statement concerning the sensed data is verified or not. This logic function is part of the public knowledge shared between the prover 120 and the verifier 130. The software code of the logic function can be considered to be part of the public data shared with the ZKP verifier.

Further, in the configuration phase, public data 111 is also shared between the prover 120 and the verifier 130 and stored respectively in the prover device 125 and the verifier device 135. In the example of FIG. 1, the logic function is a logic circuit 110.

The public data may include any type of data that needs to be shared between the prover and the verifier. The public data may include for example one or more configuration parameters of the statement to be proven, where the verifier may send the values of the one or more configuration parameters to the prover to cause the prover to configure the logic function with the received values.

The public data may include publicly available data that do not need to be sent by the verifier to the prover, e.g. a current time, a current date, etc.

Further, in the configuration phase, the verifier may configure the prover with the logic function, for example by selecting the logic function to be used by the prover among a set of predefined logic functions and by sending an identification of the logic function to the prover, e.g. to cause the prover to execute the identified logic function for ZKP generation.

In a second phase (referred to as the execution phase), the prover 120 uses a proof generation algorithm 121 to generate a proof 150 (ZKP 150) that a statement with respect to the sensed data is true.

The verifier device 135 has no knowledge of private data 112: the private data includes at least the sensed data acquired by the prover device and may include other data that must not be revealed to the verifier. The truth of the statement is verified by the logic function (e.g. logic circuit) 110 using as inputs the public data 111 and the private data 112. When the statement is true, the proof of the truth of the statement is generated by the prover and then sent to the verifier device 135 for verification by the prover 130. The verifier 130 uses a proof verification algorithm 131 to verify whether the received proof 150 is valid or not.

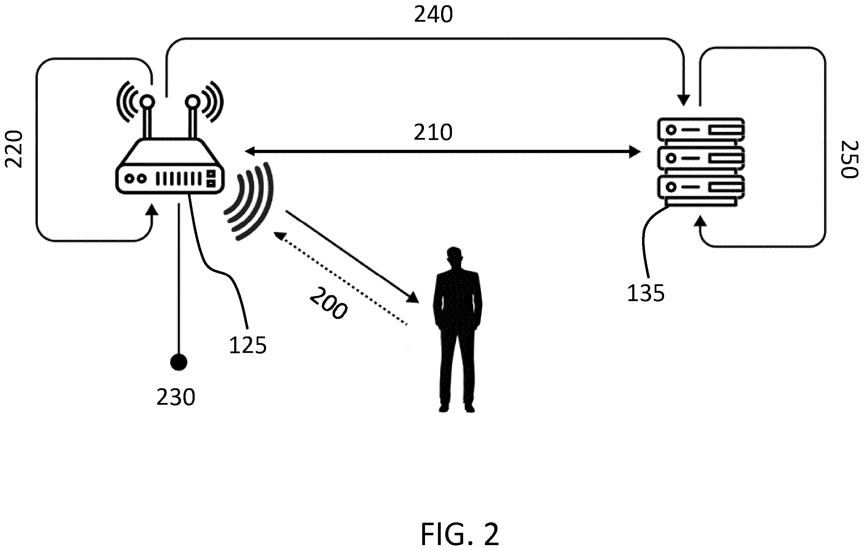

FIG. 2 shows a flow diagram of a method for ZKP generation and verification according to one or more example embodiments.

The steps of the method may be implemented, on one side, by prover device 125 (e.g. sensing device) playing the role of a prover (e.g. a sensing device in a UE) and, on the other side, by a verifier device 135 (e.g. a network entity) playing the role of a verifier according to any example described herein.

In this example, the verifier device 135 may be configured with a third-party service/application that performs the steps described herein for the verifier device 135. The prover device 125 (e.g. sensing device) may perform a sensing activity or sensing service as defined 5G NR or 6G. The example described with respect to FIG. 2 is not limitative and any other type of devices playing the role of a prover and a verifier may be considered.

While the steps are described in a sequential manner, the person skilled in the art will appreciate that some steps may be omitted, combined, performed in different order and / or in parallel.

In step 200: a configuration of the prover device 125 (e.g. sensing device) is performed. Depending on the use-case, the verifier device 135 that implements the functions of a verifier may send a request to the prover device 125 (e.g. sensing device) to trigger the generation of the proof and/or the execution by the prover of the logic function in order to prove that a given statement is true, e.g. the presence or activity or whatever other action/property performed or owned by the prover device 125 (e.g. sensing device).

This step 200 is optional and is present only in "pull mode" embodiments (i.e. synchronous modes). Otherwise, the prover device 125 (e.g. sensing device) may directly and autonomously generate ZKP proofs without receiving a specific request to trigger the proof generation and/or logic function execution. For example, the prover device 125 (e.g. sensing device) may generate a ZKP proof based on any kind of trigger, when needed based on one or more criteria, when new data are sensed, when the sensed data exceeds a threshold value, periodically, etc.

In step 200, in addition or in alternative, the verifier device 135 may configure the prover device 125 (e.g. sensing device) with one or more trigger parameters that define when the prover device 125 (e.g. sensing device) should generate a proof.

In step 200, in addition or in alternative, the verifier device 135 may configure the prover device 125 (e.g. sensing device) with public data, e.g. by sending the public data to the prover device 125 (e.g. sensing device).

In step 210: the prover device 125 (e.g. sensing device) acquires sensed data that are part of the private data 112, e.g. by performing some sensing activity (e.g. as a sequence of transmit and receive operations).

In step 220: the prover device 125 (e.g. sensing device) computes an output of the logic function 110 (e.g. in response to a verifier's request) using as input the private data 112 and the public data 111, wherein the output of the logic function indicates whether the statement relating to the private data 112 is true or false. If the statement is true, the prover device 125 generates a ZKP that the statement is verified using a ZKP generation algorithm. The ZKP is generated by applying a ZKP generation algorithm to the public data and private data using the logic function, where the private data includes the sensed data.

In step 230: the sensed data acquired in step 210 are deleted from the prover device 125 (e.g. sensing device). The sensed data may be deleted from the sensing device immediately after the ZKP is generated and/or before the ZKP is sent to the verifier. This allows to leverage unmanaged and unsecure end-devices used as sensing devices without worrying about data privacy since the sensed data may be deleted and no sensed data or private data can be leaked.

In step 240: the ZKP is sent to the verifier.

In step 250: the verifier uses a ZKP verification algorithm to verify the ZKP received in step 240. The ZKP verification algorithm may use the logic function to verify the proof. If the ZKP verification algorithm gives a positive answer, the verifier trusts the proof as if it was produced by a trusted third party, without revealing anything concerning the sensed data.

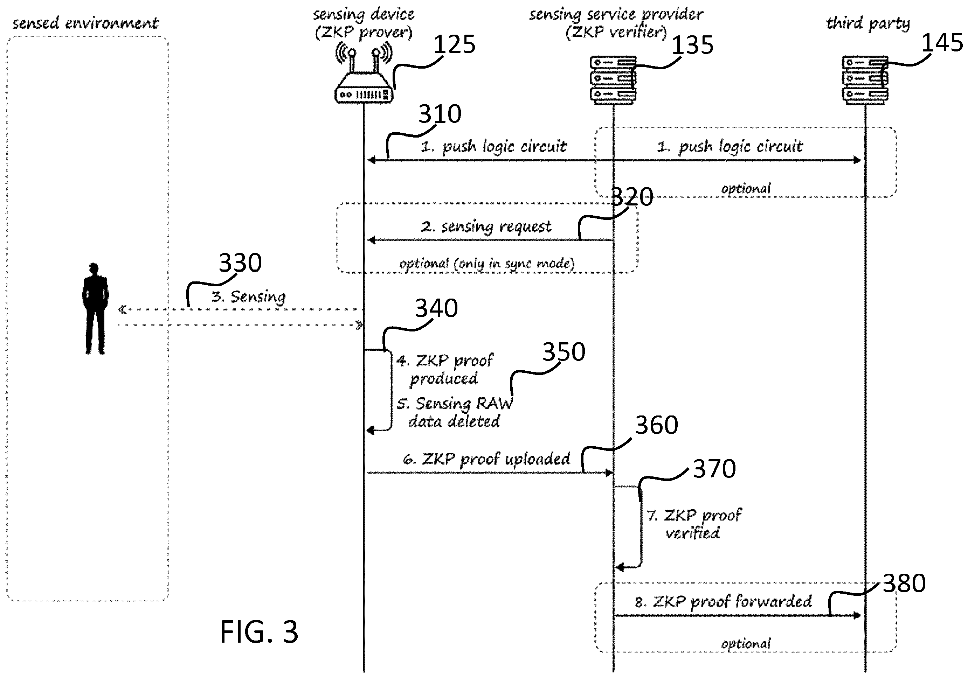

FIG. 3 shows a flowchart of a method for ZKP generation and verification according to one or more example embodiments.

The steps of the method may be implemented by a prover device 125, here a sensing device, and a verifier device 135 and the device 145 of a third party according to any example described herein.

In this example, the third party may be a customer of a sensing service and may send request(s) to the verifier device 135 to implement a sensing service among a list of proposed sensing services. Thus the verifier device 135 is an intermediate between the third party device 145 and the sensing service 125.

It is to be noted that the example described below with respect to FIG. 3 may be generalized to other use cases in which the verifier device 135 may be an intermediate between one third party device and a plurality of sensing devices, or between a plurality of third party devices and a plurality of sensing devices, or between a plurality of third party devices and one sensing device.

While the steps are described in a sequential manner, the person skilled in the art will appreciate that some steps may be omitted, combined, performed in different order and / or in parallel.

In step 310, the sensing service 125 and the verifier device 135 are configured with a logic function (e.g. a logic circuit) that is part of the public knowledge shared between the prover 120 and the verifier 130. Further, public data 111 is also shared between the prover 120 and the verifier 130 and stored respectively in the sensing service 125 and the verifier device 135.

Step 310 may be performed on request of the third party device 145 to perform a specified sensing service involving the logic function and the public data 111. The logic function may be selected among several logic functions based on a statement to be proven for the third party.

In step 320, a sensing request is sent from the verifier device 135 to the sensing service 125. This step is optional (like step 200 in FIG. 2) and may be omitted in case other triggering criteria are used to generate ZKP.

In step 330, in response to the sensing request, the sensing service 125 obtain sensed data by performing one or more sensing operations.

In step 340, the sensing service 125 generates a ZKP of the statement to be proven using a ZKP generation algorithm. The ZKP is generated using the logic function with which the sensing service 125 and the verifier device 135 are configured.

In step 350, the sensed data may be deleted.

In step 360, the sensing service 125 sends the ZKP to the verifier device 135.

In step 370, the verifier device 135 verifies the ZKP using the logic function with which the sensing service 125 and the verifier device 135 are configured.

In step 380, the ZKP may be transmitted to the third party device 145. In embodiments, the ZKP may be transmitted to the third party device 145 only if the ZKP is valid, i.e. successfully verified.

Several use cases may be considered for ZKP generation and verification. One of them used as example is UAV (Unnamed Aerial Vehicle) flight trajectory tracking. Public data may be the allowed flight paths the UAV can take, sensed data may be the real time localization of the UAV, predetermined logic function (publicly known, for example part of a 3GPP standard) may be configured to compare the real time localization to the allowed set of flight paths and generate a proof that the UAV position is indeed on an allowed flight path. This proof can then be safely shared to third parties that are able to use the public data and predetermined logic function to verify the correctness of the proof and thus verify that the UAV is in fact on an allowed localization without revealing the UAV localization at all in any point of the process. The localization data can thus be immediately deleted after the proof is generated - if there is no data - nothing can ever leak - yet the use case of being able to verify if UAVs are flying only where allowed is fulfilled.

In one or more embodiments, the sensed data may include one or more localizations of a moving entity. The logic function may be configured to determine based on the one or more localizations whether the moving entity is (respectively is not) in an allowed geographical area. Alternatively or in combination, the logic function may be configured to determine based on the one or more localizations whether the moving entity is not (respectively is) in a forbidden geographical area.

In one or more embodiments, the sensed data may include successive localizations of a moving entity. The logic function may be configured to determine based on the successive localizations whether the moving entity is (respectively is not) moving along an allowed geographical path. Alternatively or in combination, the logic function may be configured to determine based on the successive localizations whether the moving entity is not (respectively is) moving along a forbidden geographical path.

Other application may be found for sensing use cases to provide complete data security and privacy while still allowing all use cases to perform as intended.

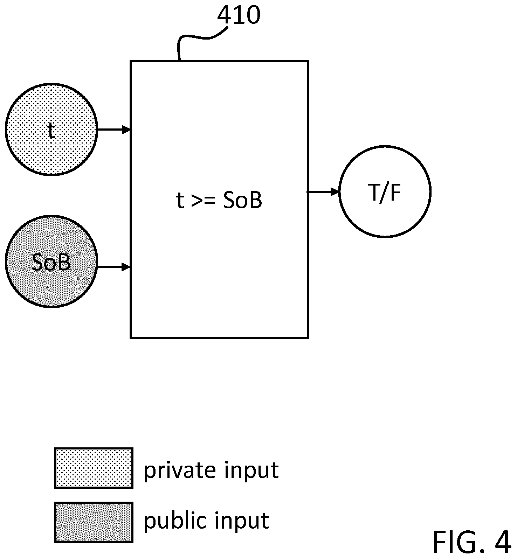

FIGS. 4 to 5 show examples of a logic function that may be implemented by one or more logic circuits or software. The logic function may be implemented by a configurable hardware or a configurable software code.

From a practical point of view, a logic circuit may include a set of mathematical operators with a separate set of inputs for each number that must be processed by the mathematical operators. The mathematical operators are connected to carry out a mathematical operation (addition, subtraction, multiplication, division, logical operation such as AND, OR, XOR, NAND, or any mathematical function, etc) and produce an output result.

For example, if the statement includes a mathematical combination (e.g. a logical combination) of at least two conditions to be verified, the logic function is configured to determine whether the statement is verified by determining whether the mathematical combination is verified, e.g. by testing at least one of the at least two conditions is verified.

To show how sensing could benefit from ZKP, an example logic function adapted to prove that somebody is at the right place and at the right time, without communicating to the verifier neither the time nor the place, is described. A ZKP may be generated to prove that an employee is at his office (e.g. an allowed place) during his working hours (e.g. an allowed time) without letting others know where he/she is and when. Thus achieving monitoring of geographical localization without breaking privacy.

As a simple example use case, to determine whether an employee is granted access to an office, we may want to prove that we know a time t, that is greater than a time SoB (aka Start Of Business time), but we will not tell anybody what the value of t is. FIG. 4 shows an example logic function 410 that is configured to calculate if t≥SoB. If it is true, the output of the logic function 410 is T (for True) and access to the office may be granted.

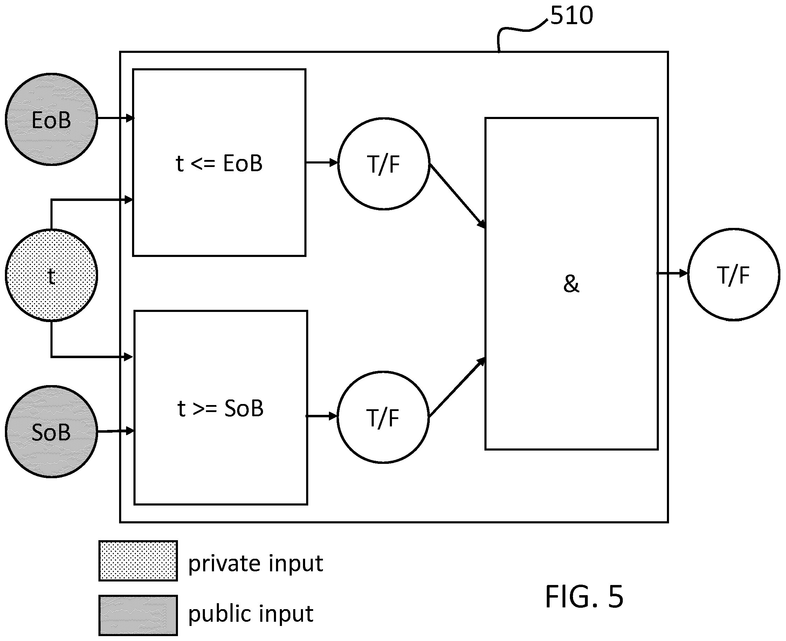

Further, for the same use-case, we may want to also prove that we know of a time t that is smaller than a time EoB (aka End of Business time), but we will not tell anybody what t is. FIG. 5 shows an example logic function 510 that is configured to determine if SoB≥t≤EoB , i.e., if the value of t is both greater than SoB and smaller than EoB this implies that the current time is within the allowed working hours and if the circuit returns T then the employee is granted access to the office.

Similarly, one may want to prove that an employee is at his office during the allowed working hours. In such a case, we need also to check that he/she is only accessing the rooms/paths allowed. As such, we need to define the allowed paths AP (these allowed paths being part of the public data) and the current position p (being part of the private data).

A more complex logic function (not represented) may be used to determine whether two conditions are true: a time-based condition (SoB≥t≤EoB) and a localization-based condition, i.e. "p belongs to a public list of known paths". In this example we will not tell anybody what p is (aka where we are currently in the office), but everybody can verify that the current private position belongs to a path in the list of the allowed paths.

By such a logic function, one can prove that the employee is in the right place at the right time without revealing the actual time and localization. Such logic function for the verification of time/position can be used to obtain an indoor position tracking which does not break any privacy law/policy since no data at all is ever shared with the verifier.

Depending on the use case, the prover and verifier are thus configured with the same logic function that allows to determine whether a statement is true.

To be more generic, the use case logic may be abstracted to a logic function with private and public data based on which a ZKP is generated to indicate whether the statement with respect to private data is true or false without the need of revealing any of the private data.

Applying ZKP to sensing can have a twofold benefit. First, the sensed data may never be permanently stored within the sensing device implementing the prover function. Second, the sensed data is never shared with the verifier since only the ZKP proof is exchanged.

The example described herein relate to simple use-case with a simple logic function for verification of a statement. However, any complex statement requiring for example a cyclic state automaton may be considered and used for proof generation. This means that the prover device may acquire sensed data in a continuous manner or in a periodical manner and may generate a proof every time sensed data is newly acquired. Thus, the verifier may check the proof and/or check when the proof was generated, i.e. that it is up to date, thereby using an asynchronous scheme for proof generation. In contrast, using a synchronous scheme for proof generation, the verifier may send a request for a proof only when a proof is needed.

Furthermore, each ZKP system, and its embedded logic function, may be combined (nested) in a way that for example when the output of the logic function changes (e.g. a first statement is true and then became false) another process is triggered such as another ZKP generation (to generate a proof that a second statement is true). An example could be a home security system that is configured to continuously monitor if somebody/something is in the space and generate a proof saying "all good" (corresponding to the first statement) if there is no one or if the person detected is allowed to be there. However, when the home security system detects there is someone/something which is not allowed to be there, it would generate a proof that this is an anomaly (corresponding to the second statement) and trigger some action via for example calling some remote API end point and sending the proof of the second statement.

The methods disclosed herein provide a response to privacy / data security / misuse issues and is widely applicable to the technology of sensing. The methods disclosed herein allow various use cases to be implemented using any type of logic function and make it impossible for the sensing data to leak, be misused. The sensed data are used for the defined use case(s) using the configured logic function and to generate a proof of correct execution of that logic function, i.e. that the statement is verified, based on the private and public data.

The prover device may correspond to any device including sensing function like a user equipment, UE. A user equipment, UE, (or user terminal, user device) may refer to a computing device that includes wireless communication functions with or without a subscriber identification module (SIM), including, but not limited to, the following types of devices: a mobile station (MS), a mobile phone, a radio cell phone, a smartphone, a personal digital assistant (PDA), a handset, a device using a wireless modem (alarm or measurement device, etc.), a laptop and/or touch screen computer, a tablet, a phablet, a game console, a notebook, a multimedia device, an loT (Internet of the Things) device, as examples.

The verifier device may correspond to any device requiring a proof of a statement concerning sensed data, including for example a network entity including, but not limited to, the following types of devices: a network node, a server, a gateway, a controller, a router, a switch, an access node, etc.

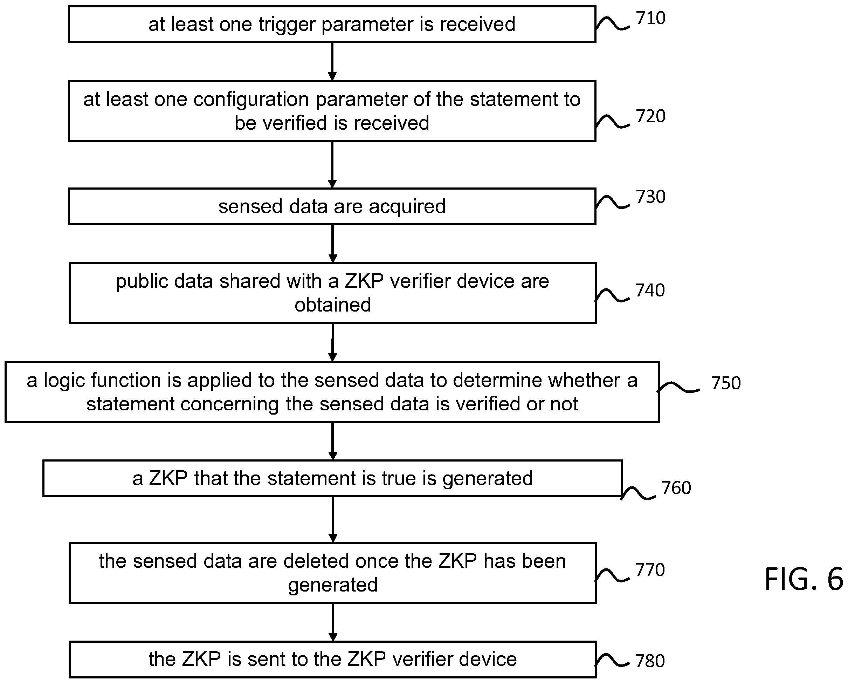

FIG. 6 shows a flowchart of a method for ZKP generation according to one or more example embodiments.

The steps of the method may be implemented by a prover device according to any example described herein. While the steps are described in a sequential manner, the person skilled in the art will appreciate that some steps may be omitted, combined, performed in different order and / or in parallel.

In step 710, at least one trigger parameter may be received, where the trigger parameter specifies when a ZKP has to be generated for a statement to be verified.

In step 720, at least one configuration parameter of the statement to be verified may be received from the verifier device and the logic function may be configured with the received at least one configuration parameter.

The statement may be any type of statement disclosed herein. The statement may be a mathematical combination of at least two conditions, wherein to determine whether the statement is verified the logic function is adapted to determine whether the mathematical combination is verified.

In step 730, sensed data are acquired.

In step 740, public data shared with a ZKP verifier device are obtained. The public data may include at least one parameter of the statement to be verified by the logic function.

In step 750, a logic function is applied to the sensed data to determine whether a statement concerning the sensed data is verified or not. The logic function is shared with the ZKP verifier device.

In step 760, a ZKP that the statement is true is generated, by applying a ZKP generation algorithm to the public data and private data using the logic function, where the private data including the sensed data.

In step 770, the sensed data are deleted once the ZKP has been generated.

In step 780, the ZKP is sent to the ZKP verifier device. Deleting the sensed data is performed before sending the ZKP to the ZKP verifier device.

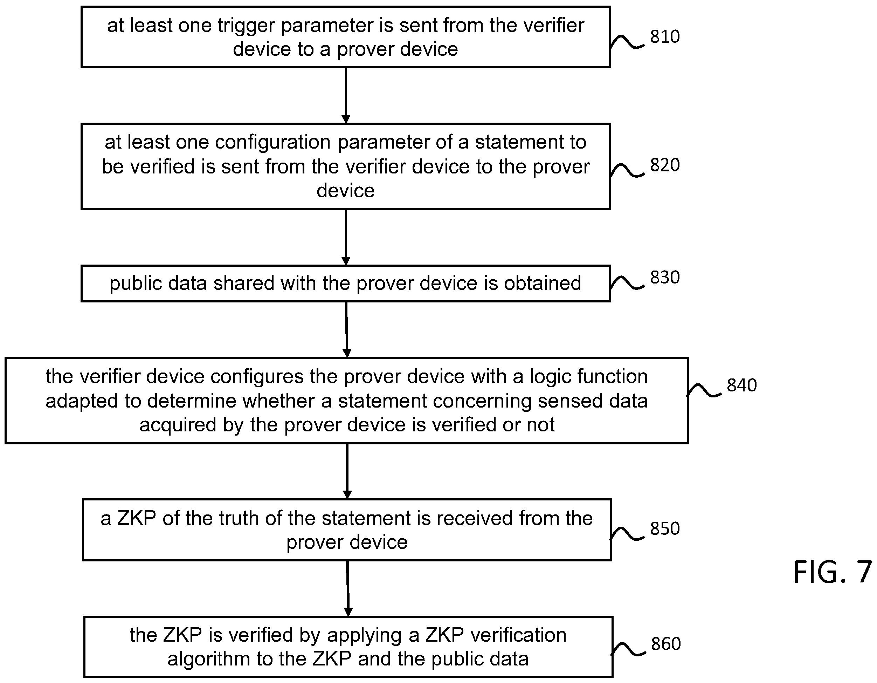

FIG. 7 shows a flowchart of a method for ZKP verification according to one or more example embodiments.

The steps of the method may be implemented by a ZKP verifier device according to any example described herein. While the steps are described in a sequential manner, the person skilled in the art will appreciate that some steps may be omitted, combined, performed in different order and / or in parallel.

In step 810, at least one trigger parameter may be sent to a ZKP prover device, where the trigger parameter specifies when a ZKP has to be generated.

In step 820, at least one configuration parameter of a statement to be verified may be sent from the ZKP verifier device to the ZKP prover device to cause the prover device to configure the logic function with the configuration parameter(s).

The statement may be any type of statement disclosed herein. The statement may be a mathematical combination of at least two conditions, wherein to determine whether the statement is verified the logic function is adapted to determine whether the mathematical combination is verified.

In step 830, public data shared with the ZKP prover device is obtained. The public data may include at least one parameter of the statement to be verified by the logic function.

In step 840, the ZKP verifier device may configure the ZKP prover device with a logic function adapted to determine whether a statement concerning sensed data acquired by the ZKP prover device is verified or not.

Configuring the ZKP prover device with a logic function may include sending at least one configuration parameter of the statement to the ZKP prover device. Configuring the ZKP prover device with the logic function may include selecting the logic function to be used by the ZKP prover device among a set of logic functions; and sending an identification of the logic function to the ZKP prover device to cause the ZKP prover device to use the identified logic function.

In step 850, a ZKP of the truth of the statement is received from the ZKP prover device.

In step 860, the ZKP is verified by applying a ZKP verification algorithm to the received ZKP and the public data.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe operations as a sequential process, many of the operations may be performed in parallel, concurrently or simultaneously. Also some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions. Additionally, the processor, memory and instructions, serve as means for providing or causing performance by the host device or host system of one or more functions disclosed herein.

The host device or host system may be a general-purpose computer and / or computing system, a special purpose computer and / or computing system, a programmable processing apparatus and / or system, a machine, etc. The host device or host system may be or include or be part of: a user equipment, client device, mobile phone, laptop, computer, network element, data server, network resource controller, network apparatus, router, gateway, network node, computer, cloud-based server, web server, application server, proxy server, etc.

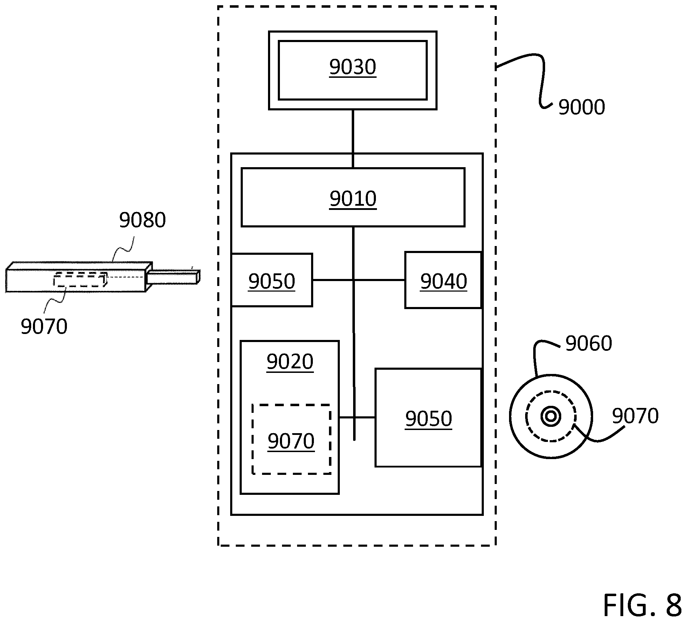

FIG. 8 illustrates an example embodiment of an apparatus 9000. The apparatus 9000 may be a verifier device or prover device, or be part of a verifier device or prover device as disclosed herein. The apparatus 9000 may be used for performing one or more or all steps of a method disclosed herein for a prover device or a verifier device. The apparatus 9000 may be used for implementing one or more functions of a prover device or a verifier device disclosed herein.

As represented schematically by FIG. 8, the apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic. Other hardware, conventional or custom, may also be included. A processor or processing circuit may be configured to execute instructions adapted for causing the host device or host system to perform one or more functions disclosed herein for the host device or host system.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. The means may include at least one processor and at least one memory including computer program code, wherein the at least one memory and the computer program code are configured to, with the at least one processor, cause an apparatus or system to perform the concerned function(s).

As used in this application, the term "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

## Claims

1. A method comprising:
- acquiring sensed data;
- obtaining public data shared with a Zero Knowledge Proof, ZKP, verifier device;
- applying a logic function to the sensed data to determine whether a statement concerning the sensed data is verified or not, wherein the logic function is shared with the ZKP verifier device;
- generating a ZKP that the statement is true by applying a ZKP generation algorithm to the public data and private data using the logic function, the private data including the sensed data;
- deleting the sensed data once the ZKP has been generated;
- sending the ZKP to the ZKP verifier device;
wherein deleting the sensed data is performed before sending the ZKP to the ZKP verifier device.

2. The method of claim 1, wherein the public data includes at least one parameter of the statement to be verified by the logic function.

3. The method of claim 1 or 2, wherein the statement includes a mathematical combination of at least two conditions, wherein to determine whether the statement is verified the logic function is adapted to determine whether the mathematical combination is verified.

4. The method of any of the preceding claims, wherein to determine whether the statement is verified the logic function is adapted to determine whether a property of the sensed data is verified.

5. The method of any of the preceding claims, wherein to determine whether the statement is verified the logic function is adapted to determine whether an event has occurred in the sensed data.

6. The method of any of the preceding claims, wherein to determine whether the statement is verified the logic function is adapted to determine whether the logic function was applied to the sensed data during a given time period, wherein the public data includes at least one parameter defining the given time period.

7. The method of any of the preceding claims, wherein the sensed data includes at least one localization of a moving entity,
wherein to determine whether the statement is verified the logic function is adapted to perform at least one of:
determining based on the at least one localization whether the moving entity is in an allowed geographical area; and
determining based on the at least one localization whether the moving entity is not in a forbidden geographical area.

8. The method of any of the preceding claims, wherein the sensed data includes successive localizations of a moving entity,
wherein to determine whether the statement is verified the logic function is adapted to perform at least one of:
determining based on the successive localizations whether the moving entity is moving along an allowed geographical path; and
determining based on the successive localizations whether the moving entity is not moving along a forbidden geographical path.

9. The method of any of the preceding claims, comprising:
- receiving, from the verifier device, at least one trigger parameter that specifies when the ZKP has to be generated.

10. The method of any of the preceding claims, comprising:
- receiving, from the verifier device, at least one configuration parameter of the statement to be verified; and
- configuring the logic function with the received at least one configuration parameter.

11. An apparatus comprising means for performing the method of any of claims 1 to 10.

12. A method comprising:
- obtaining public data shared with a Zero Knowledge Proof, ZKP, prover device;
- configuring the ZKP prover device with a logic function adapted to determine whether a statement concerning sensed data acquired by the ZKP prover device is verified or not;
- receiving, from the ZKP prover device, a ZKP that the statement is true;
- verifying the ZKP by applying a ZKP verification algorithm to the ZKP and the public data.

13. The method of claim 12, wherein configuring the ZKP prover device with a logic function includes sending at least one configuration parameter of the statement to the ZKP prover device.

14. The method of claim 12, wherein configuring the ZKP prover device with the logic function includes selecting the logic function to be used by the prover device among a set of logic functions; and sending an identification of the logic function to the ZKP prover device.

15. An apparatus comprising means for performing the method of any of claims 12 to 14.
